# EUROPÄISCHE PATENTSCHRIFT

(11) **EP 1 162 874 B1**
(45) Veröffentlichungstag und Bekanntmachung des Hinweises auf die Patenterteilung: **21.05.2003**
(21) Anmeldenummer: 01942273.2
(22) Anmeldetag: 05.01.2001
(51) Int. Cl.: A01F 29/20

(54) **FELDHÄCKSLER MIT EINEM REIBBODEN**
FORAGE HARVESTER COMPRISING AN ABRADING BASE
RAMASSEUSE-HACHEUSE A FOND RAPEUR

(30) Priorität: 12.01.2000 DE 20000454 U
(43) Veröffentlichungstag der Anmeldung: 19.12.2001
(73) Patentinhaber: Rutz, Georg, 85655 Grosshelfendorf (DE)
(72) Erfinder: Rutz, Georg, 85655 Grosshelfendorf (DE)
(74) Vertreter: Prüfer, Lutz H., Dipl.-Phys.
(86) Internationale Anmeldenummer: EP0100079
(87) Internationale Veröffentlichungsnummer: WO01050840

(56) Entgegenhaltungen:
- EP-A- 0 153 621
- DE-A- 2 051 209
- DE-A- 2 324 996
- DE-A- 3 400 252
- DE-A- 3 444 502
- FR-A- 2 310 065
- FR-A- 2 545 317
- US-A- 4 312 481

## Beschreibung

Die vorliegende Erfindung bezieht sich auf einen Feldhäcksler mit einem Reibboden, wie er in dem Oberbegriff des Anspruches 1 angegeben ist.

Ein derartiger Feldhäcksler ist aus US 4 312 481 bekannt. Der Feldhäcksler weist eine Mehrzahl von länglichen Vorsprüngen auf, die parallel zu einander in einer Reihe in axialer Richtung auf der Messertrommel angeordnet sind.

Aus GB 2 297 502 A ist ein Feldhäcksler bekannt, bei dem eine Mehrzahl von Messern auf der Messertrommel angebracht sind, die in zwei Sätzen in der Drehrichtung der Messertrommel versetzt gegeneinander angeordnet sind.

Ein anderer Feldhäcksler ist aus DE 33 16 241 C 2 bekannt. Der Reibboden weißt eine Mehrzahl in Umfangsausrichtung versetzter und sich senkrecht zur Trommelachse über die Breite des Reibbodens erstreckende Balken mit Schneidekanten auf. Bei einem derartigen Reibboden besteht das Problem, daß sich das Erntegut zwischen den Rippen festsetzt und damit den Reibboden so zusetzt, daß die Balken nicht mehr über die wirksame Oberfläche hervorstehen und keine Reibleistung mehr vorhanden ist.

Ein weiterer Feldhäcksler mit einem Reibboden ist aus DE 26 42 103 bekannt. Bei diesem Feldhäcksler besteht der Reibboden aus einer in Bleche von außen nach innen eingedrückte Vielzahl von Eindellungen, deren steil ansteigende Teilfläche mit ihrer Kante der Umlaufrichtung der Messertrommel entgegengerichtet ist und sich senkrecht zur Trommelachse erstrecken. Die Eindellungen weisen einen kleinen Abstand voneinander auf und sind reihenweise versetzt. Das Messer an der Messertrommel ist unter einem bestimmten Winkel zu einem Gegenmesser an dem Reibboden angestellt. Da der Boden geschlossen bleiben muß, kann die Schneidkante allenfalls ca. 4 mm nach oben hervorstehen. Diese geringe Höhe wird im Betrieb schnell zugesetzt.

Es ist daher Aufgabe der Erfindung, einen Feldhäcksler mit einem Reibboden vorzusehen, bei dem der Reibboden nicht zugesetzt wird.

Diese Aufgabe wird gelöst durch einen Feldhäcksler mit einem Reibboden, wie er in dem Anspruch 1 angegeben ist.

Da die Vorsprünge, die mit dem Messer zusammenwirken, in axialer Richtung und in Umfangsrichtung beabstandet sind, kann das zerkleinerte Erntegut leicht zwischen den Vorsprüngen wieder heraustreten und versetzt daher den Reibboden weniger. Da die Vorsprünge zwei mit der Schneidekante des Messers zusammenwirkende Seitenflächen aufweisen, wird die Wirksamkeit der Zerkleinerungstätigkeit erhöht. Dieses macht es möglich, daß die Vorsprünge in einem größeren Abstand voneinander angebracht werden können, als wenn sie nur eine Seitenfläche aufweisen, die mit dem Messer zusammenwirkt. Der größere Abstand der Vorsprünge verbessert die Reinigungsfähigkeit, so daß der Reibboden weniger zum Versetzen neigt.

Bevorzugte Ausgestaltungen ergeben sich aus den Unteransprüchen.
Weitere Merkmale und Vorteile der Erfindung ergeben sich aus der folgenden Beschreibung von Ausführungsbeispielen anhand der Figuren. Von den Figuren zeigen:
- Fig. 1:: eine schematische Ansicht eines Feldhäckslers;
- Fig. 2:: ein Gehäuse mit einer Messertrommel; und
- Fig. 3:: einen Ausschnitt aus dem Reibboden mit einer ersten Anordnung von Vorsprüngen.

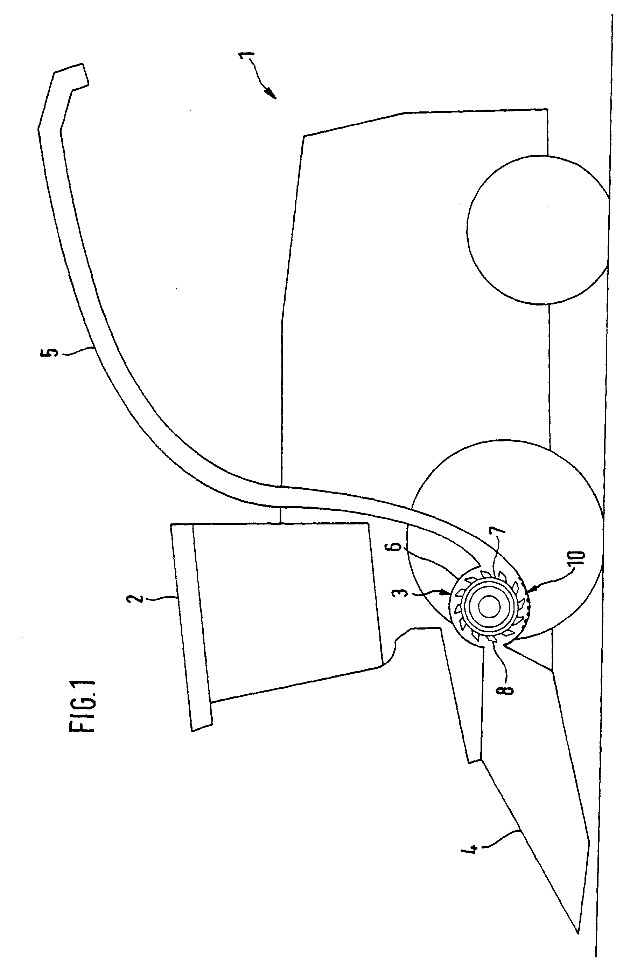

Wie in Fig. 1 gezeigt ist, ist gemäß der vorliegenden Ausführungsform ein Feldhäcksler 1 vorgesehen, der selbstfahrend ist. Der Feldhäcksler weist einen Aufbau mit einem Fahrergehäuse 2 auf. Im Inneren des Feldhäckslers 1 ist ein Schneidwerk 3 vorgesehen. Das Schneidwerk 3 wird durch ein Einzugsgehäuse 4 mit Erntegut beliefert, das zu zerkleinern ist. Das zerkleinerte Erntegut wird durch einen Auswurfschacht 5 ausgeworfen.

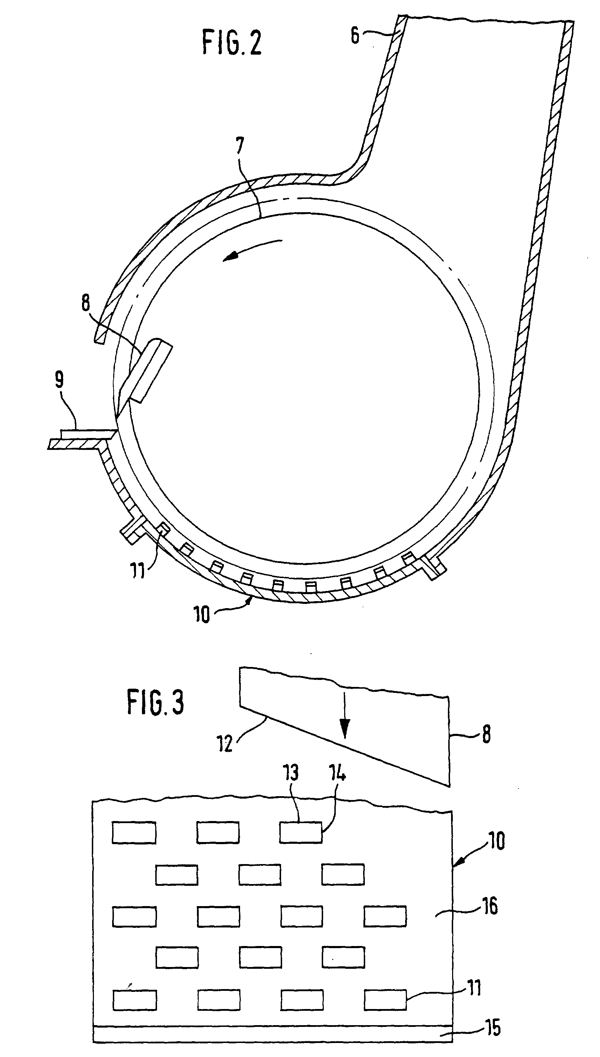

Wie am besten aus Fig. 2 zu sehen ist, weist das Schneidwerk 3 ein Gehäuse 6 und eine darin drehbar vorgesehene Messertrommel 7 auf. Die Messertrommel 7 ist mit einer Mehrzahl von Messern 8 versehen, von denen nur eines in Fig. 2 gezeigt ist. An dem Gehäuse 6 ist eine Gegenschneide 9 vorgesehen, die mit dem Messer 8 zum Zerkleinern von Erntegut zusammenwirkt. Im unteren Teil des Gehäuses 6 ist ein Reibboden 10 angebracht, der aus einem Boden 16 besteht, auf dem eine Mehrzahl von Vorsprüngen 11 aufgeschweißt ist, die ebenfalls mit dem Messer 8 zum Zerkleinern des Erntegutes zusammenwirken. Die Vorsprünge weisen im wesentlichen senkrecht zu der Platte stehende Begrenzungswände und eine plane Oberfläche auf.

Die Messer 8 erstrecken sich schräg zu der Drehachse der Messertrommel 7 auf dem Umfang der Messertrommel 7 und sind in der axialen Richtung unterteilt. Die Messer 8 des einen axialen Abschnitts sind gegenüber den Messern 8 des anderen axialen Abschnitts versetzt, so daß die Messer 8 auf Lücke stehen. Die Messer 8 sind gegenüber der Drehachse der Messertrommel 7 so geneigt, daß sie in der Draufsicht eine V-Form zeigen.

Die mit den Messern 8 zusammenwirkenden Vorsprünge 11 sind in Reihen parallel zu der Drehachse der Messertrommel 7 auf dem Reibboden 10 angeordnet. Die Vorsprünge sind der axialen Richtung in Abständen voneinander angebracht, die etwa der Ausdehnung der Vorsprünge in axialer Richtung entspricht. Die Vorsprünge 11 sind in einer Reihe gegenüber den Vorsprüngen 11 einer anderen Reihe versetzt. Dadurch sind diagonale Durchgänge zwischen den Vorsprüngen 11 gebildet. Die Messer 8 sind so schräg vorgesehen, daß ihre Schneidekante 12 senkrecht auf der Richtung der Durchgänge steht. Dann wirkt die Schneidekante 12 mit einer Vorderfläche 13 der Vorsprünge, wie sie von der Schneidekante 12 gesehen wird, und einer Seitenfläche 14 der Vorsprünge 11 zusammen. Wegen der doppelten Wirkung kann das Erntegut besonders effektiv zerkleinert und aufgerieben werden.

Da die Vorsprünge sowohl in der axialen Richtung als auch in der Umfangsrichtung einen Abstand voneinander aufweisen, können die Messer 8 das zerkleinerte Erntegut gut aus den Zwischenräumen zwischen den Vorsprüngen 11 herausschieben, so daß ein Zusetzen des Reibbodens 3 verhindert wird.

Bei der in Fig. 3 gezeigten Ausführungsform sind die Vorsprünge quaderförmig ausgebildet. Die quaderförmigen Vorsprünge einer Reihe sind gegenüber den quaderförmigen Vorsprüngen einer benachbarten Reihe versetzt. Die Vorsprünge können jedoch auch in Umfangsrichtung miteinander ausgerichtet sein.
Bei der in Fig. 3 gezeigten Ausführungsform sind die Vorsprünge mit ihrer Schneidekante 14 in der Richtung der Drehachse der Messertrommel 7 angeordnet. Die Vorsprünge können quaderförmig ausgebildet sein und alternativ in Reihen angeordnet sein, die gegenüber der Drehachse der Messertrommel 7 geneigt sind. Wenn die Messer V-förmig angeordnet sind, können auch die quaderförmigen Vorsprünge in den beiden Hälften des Reibbodens mit einer unterschiedlichen Schrägstellung bezüglich der Drehachse der Messertrommel 7 angeordnet werden. Wesentlich ist, daß beide Seiten 13 und 14 und die entsprechenden Schneidekanten 12 der Messer 8 geneigt sind.

In der Fig. 3 sind die Vorsprünge mit quaderförmigen Querschnitten gezeigt. Die Vorsprünge können jedoch auch einen quadratischen Querschnitt aufweisen. Des weiteren können die Vorsprünge einen kreisförmigen oder ovalen Querschnitt aufweisen.

In allen Fällen können die Vorsprünge, wie in der Fig. 3 gezeigt ist, gegeneinander versetzt angeordnet sein oder die Vorsprünge können miteinander ausgerichtet sein. In dem letzteren Fall ist die Reinigungswirkung am größten, da das Erntegut in den Durchgängen zwischen den Vorsprüngen 11 am besten herausgekehrt werden kann.

Im Betrieb wird, während sich der Feldhäcksler 1 vorwärts bewegt, Erntegut durch das Einzugsgehäuse 4 aufgenommen, zu dem Schneidwerk 3 geführt und von den Messern 8 in Zusammenwirkung mit der Gegenschneide 9 und den Vorsprüngen 11 des Reibbodens 10 zerkleinert. Danach wird es durch die Drehung der Messertrommel 7 durch den Auswurfschacht 5 ausgeworfen, so daß es von einem Behälter entweder auf dem Feldhäcksler oder in einem nebenfahrenden Fahrzeug aufgefangen werden kann. Dabei wird das Erntegut effektiv zerkleinert und aufgerieben.

Am Ende des Reibbodens befindet sich eine Abschlußleiste, die die Verwirbelung des Erntegutes in einen geraden Fluss umwandelt und so den Einsatz auch für Korncrackerwalzen ermöglicht, ohne diese einer Verstopfung auszusetzen.

Die Vorsprünge 11 sind als Quader oder auch als Würfel mit einer Höhe von 10 bis 20 mm und vorzugsweise 14 bis 18 und ganz besonders ungefähr 16 mm ausgebildet. Die Vorsprünge sind auf dem Boden 16 aufgeschweißt.

## Patentansprüche

1. Feldhäcksler mit einem Reibboden (10), mit
einem Gehäuse (6),
einer in dem Gehäuse (6) drehbar vorgesehenen Messertrommel (7) und einem an der Messertrommel (7) angebrachten Messer (8), das mit dem Reibboden (10) zum Feinzerkleinern von Erntegut zusammenwirkt,
wobei der Reibboden (10) eine Mehrzahl von axial beabstandeten Vorsprüngen (11) aufweist,
das Messer (8) eine Schneidekante (12) aufweist, und
die Vorsprünge mindestens zwei Seitenflächen (13, 14) mit Kanten aufweisen, die einen Winkel miteinander bilden und die beide nicht parallel zu der Schneidekante (12) des Messers (8) stehen,
**dadurch gekennzeichnet,**
**daß** ein erster und ein zweiter Satz Messer (8) vorgesehen sind, die auf je einer Hälfte der Messertrommel (7) angeordnet sind, die gegeneinander in der Drehrichtung der Messertrommel (7) versetzt sind und deren Schneidekanten gegen die Drehachse der Messertrommel (7) geneigt sind,
**daß** eine Mehrzahl von Vorsprüngen (11) in Reihen parallel zu der Drehachse des Messertrommel (7) angeordnet sind und
**daß** die Vorsprünge (11) einer Reihe gegen die Vorsprünge (11) einer anderen Reihe axial versetzt sind.

2. Feldhäcksler nach Anspruch 1, bei dem die Vorsprünge (11) einen rechteckigen Querschnitt aufweisen.

3. Feldhäcksler nach Anspruch 2, bei dem die Vorsprünge (11) einen quadratischen Querschnitt aufweisen.

4. Feldhäcksler nach Anspruch 2, bei dem die Vorsprünge (11) quaderförmig parallel zu der Drehachse der Messertrommel (7) vorgesehen sind.

5. Feldhäcksler nach Anspruch 1, bei dem die Vorsprünge einen kreisförmigen oder ovalen Querschnitt aufweisen, wobei sich die Längsachse des Ovals parallel zu der Drehachse der Messertrommel (7) erstreckt.

6. Feldhäcksler nach einem der Ansprüche 1 bis 5, bei dem die Messer (8) gegenüber der Drehachse der Messertrommel (7) so geneigt sind, daß sie in der Draufsicht eine V-Form zeigen.

## Claims

1. Field shredder with a friction base (10), with a housing (6),
a blade drum (7) rotatably provided in the housing (6) and a blade (8) attached to the blade drum (7), which cooperates with the friction base (10) to finely chop harvested material, wherein the friction base (10) comprises a plurality of protrusions (11) axially spaced apart,
the blade (8) comprises a cutting edge (12), and
the protrusions comprise at least two side surfaces (13, 14) with edges forming an angle with each other and which are both not parallel to the cutting edge (12) of the blade (8), **characterized in**
**that** a first and a second set of blades (8) are provided, each arranged on one half of the blade drum (7) offset against one another in the direction of rotation of the blade drum (7) and
the cutting edges of which are inclined towards the rotary axis of the blade drum (7),
**that** a plurality of protrusions (11) are arranged in rows parallel to the rotary axis of the blade drum (7) and that the protrusions (11) of one row are axially offset against the protrusions of another row.

2. Field shredder according to Claim 1, wherein the protrusions (11) comprise a rectangular cross-section.

3. Field shredder according to Claim 2, wherein the protrusions (11) comprise a square cross-section.

4. Field shredder according to Claim 2, wherein the protrusions (11) are provided in a parallelepiped shape parallel to the rotary axis of the blade drum (7).

5. Field shredder according to Claim 1, wherein the protrusions (11) comprise a circular or an oval cross-section, with the longitudinal axis of the oval extending parallel to the rotary axis of the blade drum (7).

6. Field shredder according to one of the claims 1 to 5, wherein the blades (8) are inclined against the rotary axis of the blade drum (7) in such a way that they show a V shape in a top view.

## Revendications

1. Ensileuse munie d'un fond rapeur (10), comprenant un carter (6), un tambour hacheur (7) logé de manière rotative dans le carter (6) et un couteau (8) agencé au niveau du tambour hacheur (7) et destiné à coopérer avec le fond rapeur (10) pour hacher menu le fourrage, dans laquelle le fond rapeur (10) comporte une pluralité de saillies (11) écartées les unes des autres dans le sens axial, le couteau (8) comporte une arête de coupe (12) et les saillies comportent au moins deux faces latérales (13, 14) avec des arêtes, qui forment un angle entre elles et qui ne sont pas parallèles à l'arête de coupe (12) du couteau (8), **caractérisée en ce qu'**il est prévu un premier et un deuxième jeu de couteaux (8), qui sont disposés chacun sur une moitié du tambour hacheur (7), qui sont décalés les uns par rapport aux autres dans la direction de rotation du tambour hacheur (7) et dont les arêtes de coupe sont inclinées par rapport à l'axe de rotation du tambour hacheur (7), **en ce qu'**une pluralité de saillies (11) sont disposées en rangées parallèles à l'axe de rotation du tambour hacheur (7) et **en ce que** les saillies (11) d'une rangée sont décalées dans le sens axial par rapport aux saillies (11) d'une autre rangée.

2. Ensileuse selon la revendication 1, dans laquelle les saillies (11) ont une section rectangulaire.

3. Ensileuse selon la revendication 2, dans laquelle les saillies (11) ont une section carrée.

4. Ensileuse selon la revendication 2, dans laquelle les saillies (11) sont prévues sous forme de parallélépipèdes parallèles à l'axe de rotation du tambour hacheur (7).

5. Ensileuse selon la revendication 1, dans laquelle les saillies ont une section circulaire ou ovale, l'axe longitudinal de l'ovale étant orienté parallèlement à l'axe de rotation du tambour hacheur (7).

6. Ensileuse selon une des revendications 1 à 5, dans laquelle les couteaux (8) sont-inclinés par rapport à l'axe de rotation du tambour hacheur (7), de manière à présenter une forme en V en vue de dessus.
